# FASCICULE DE BREVET EUROPEEN

(11) **EP 0 407 283 B1**
(45) Date de publication et mention de la délivrance du brevet: **28.09.1994**
(21) Numéro de dépôt: 90401905.6
(22) Date de dépôt: 02.07.1990
(51) Int. Cl.: G05D 9/04, F17C 13/02

(54) **Accumulateur de liquide sous haute pression à niveau de liquide régulé**
Flüssigkeitsakkumulator unter Hochdruck mit reguliertem Flüssigkeitsspiegel
Liquid accumulator under high pressure with regulated liquid level

(30) Priorité: 05.07.1989 FR 8909060
(43) Date de publication de la demande: 09.01.1991
(73) Titulaire: SOCIETE EUROPEENNE DE PROPULSION, 92150 Suresnes (FR)
(72) Inventeur: Gris, Philippe, F-27940 Aubevoye (FR)
(74) Mandataire: Thévenet, Jean-Bruno

(56) Documents cités:
- EP-A- 0 065 847
- GB-A- 575 695
- GB-A- 610 071
- US-A- 3 845 636
- US-A- 3 858 404

## Description

La présente invention a pour objet un accumulateur de liquide sous haute pression à niveau de liquide régulé, comprenant une enceinte qui est en communication avec un circuit hydraulique et qui contient un fluide liquide occupant partiellement l'espace interne à l'enceinte, un dispositif d'injection de gaz sous pression à l'intérieur de l'enceinte, et un dispositif de soutirage du gaz présent dans l'enceinte, lequel dispositif de soutirage présente une section de passage dont la valeur croît lorsque le niveau de liquide baisse à l'intérieur de l'enceinte et décroît lorsque le niveau de liquide monte à l'intérieur de l'enceinte. De tels systèmes sont décrits par exemple dans les documents US-A-3 858 404 et GB-A- 610 071.

Il est déjà connu de mettre en oeuvre un accumulateur de liquide comprenant une enceinte communiquant avec une installation hydraulique pouvant être sous haute pression, le fluide contenu dans l'enceinte étant partiellement liquide et partiellement gazeux. L'accumulateur de liquide peut coopérer avec un système de contrôle ou de régulation du niveau de liquide dans l'enceinte. Un tel système de contrôle ou de régulation de niveau de liquide implique cependant la mise en oeuvre de capteurs de niveau et de circuits de régulation qui sont la plupart du temps de type électrique. Ceci constitue un inconvénient majeur dans le cas d'applications à des systèmes véhiculant des fluides toxiques ou corrosifs, tels que les fluides utilisés dans les industries nucléaires et chimiques, ou dans le cas d'applications mettant en oeuvre des fluides volatils, par exemple sur un étage cryotechnique d'un lanceur de satellites.

La présente invention vise à remédier aux inconvénients de l'art antérieur et à permettre la réalisation d'un accumulateur de liquide sous haute pression à niveau de liquide régulé, qui n'implique pas d'utiliser des capteurs ou circuits de régulation de type électrique et qui permette sous une forme simple et robuste, par des moyens purement mécaniques, d'effectuer une régulation précise sensible et stable du niveau d'un liquide, dans une large gamme de pression, sans risque de déterioration du système de régulation.

Ces buts sont atteints grâce à un accumulateur de liquide sous haute pression à niveau de liquide régulé du type défini en tête de la description, caractérisé en ce que la partie supérieure de l'espace interne à l'enceinte est subdivisé en des première et seconde cavités par une cloison présentant au moins un orifice calibré ménagé dans une zone de la cloison qui ne risque pas d'être immergée, en ce que ladite cloison est prolongée par une portion sensiblement perpendiculaire à la surface du liquide et se prolongeant vers le bas à l'intérieur du liquide jusqu 'à un niveau Nₒ situé nettement en dessous du niveau minimal que le liquide est susceptible d'atteindre, en ce que la portion prolongée de la cloison de séparation possède une ouverture dans la zone de contrôle du niveau de liquide, l'ouverture s'étendant de part et d'autre de l'interface de niveau Nᵢ entre le fluide liquide et le gaz sous pression, en ce qu'il comprend des moyens pour maintenir sensiblement constant le débit de fluide gazeux introduit dans l'enceinte par le dispositif d'injection de gaz sous pression, en ce que le dispositif de soutirage de gaz comprend un siège de clapet coopérant avec un clapet dont la position est réglée par un élément de comparaison mobile constituant une partie de la cloison et réagissant à la différence de pression P-P₁ existant entre les première et seconde cavités, et en ce que des moyens de réglage sont associés à l'élément de comparaison mobile, de manière à permettre qu'en régime de travail normal de la régulation de niveau de liquide, le clapet (10) ne vienne jamais en contact avec son siège (4) pour maintenir en permanence un faible débit de gaz vers l'extérieur.

Dans un tel accumulateur de liquide, la différence entre les pressions des deux cavités reste faible, ce qui offre la possibilité de fonctionner dans une large gamme de pression sans rique de détériorer l'élément de comparaison, et de plus évite le phénomène de succion du liquide à travers le tube, qui réduirait la précision, et empêche l'éjection de liquide vers l'extérieur, qui pourrait être dangereux.

Par ailleurs, la loi sensiblement linéaire du débit d'éjection de gaz en fonction de la différence de pression entre les deux cavités est un élément d'obtention d'un asservissement précis.

Le débit permanent de fluide gazeux passant par l'orifice calibré de la cloison contribue à stabiliser l'asservissement et à amortir les oscillations du pointeau.

La communication permanente introduite entre les deux cavités par l'orifice calibré offre en outre la possibilité d'utiliser des liquides volatils, dans la mesure où les tensions de vapeur sont identiques dans les deux cavités par suite de ladite communication permanente entre les cavités.

La mise en oeuvre d'un ensemble entièrement mécanique avec des étanchéités uniquement statiques et l'absence de joints plastomères ou élastomères permet de résister même à des fluides très corrosifs.

Le faible débit de gaz maintenu en permanence vers l'extérieur évite le risque de matage du siège de clapet et du pointeau, tout en n'impliquant qu'une très faible consommation de gaz.

Compte tenu de la conception de l'accumulation de liquide, la masse globale des éléments participant à la régulation du niveau de liquide reste faible vis-à-vis de celle du réservoir dont la capacité peut être très importante.

Avantageusement, la portion prolongée de la cloison présente la forme d'un tube perpendiculaire à la surface du liquide et l'ouverture ménagée dans la portion prolongée dans la zone de contrôle du niveau de liquide comprend au moins une fente étroite dont les grands côtés sont orientés selon les génératrices du tube, et qui contribue à définir un système de régulation à faible gain.

Selon un premier mode de réalisation, le dispositif de soutirage de gaz présente un col subsonique défini par le siège de clapet et le clapet.

Selon un autre mode de réalisation, le dispositif de soutirage de gaz présente un col sonique défini par le siège de clapet et le clapet. Ceci permet de rendre le système largement indépendant des conditions externes.

L'élément de comparaison mobile peut être constitué par une membrane, telle qu'un soufflet, ou par un piston.

Selon un mode particulier de réalisation le dispositif de réglage en translation de l'élément de comparaison auquel est relié le clapet du dispositif de soutirage de gaz en vue d'assurer le réglage de la pression différentielle appliquée audit élément de comparaisonet d'ajuster la position d'ouverture maximale du clapet par rapport au siège de clapet comprend un ressort agissant sur l'élément de comparaison et une vis coopérant avec un écrou solidaire de la paroi de l'enceinte pour agir sur ledit ressort et présentant une tête de commande accessible de l'extérieur de l'enceinte.

Le dispositif de réglage permet notamment d'ajuster la position du niveau moyen de liquide par rapport à l'ouverture de commande ménagée dans la cloison de séparation des deux cavités.

L'ouverture ménagée dans la portion prolongée en forme de tube peut comprendre plusieurs fentes étroites de même hauteur réparties dans ledit tube et présentant des grands côtés orientés pour l'essentiel selon les génératrices du tube. La présence de plusieurs fentes pour constituer l'ouverture située dans la zone de contrôle du niveau de liquide permet d'augmenter la précision et d'améliorer la tolérance au ballottement de la surface du liquide.

Selon une caractéristique particulière, l'accumulateur de liquide comprend en outre un organe amortisseur pneumatique solidaire de l'axe du clapet du dispositif de soutirage de gaz et exerçant son action dans l'une des première et seconde cavités contenant le fluide gazeux

Dans ce cas, selon un mode particulier de réalisation, ledit organe amortisseur pneumatique comprend une membrane à soufflet montée entre la paroi de l'enceinte et une plaque à laquelle sont reliés d'une part l'élément de comparaison mobile et d'autre part l'axe de commande du clapet du dispositif de soutirage, et un trou de communication est ménagé entre la seconde cavité et l'espace interne de la membrane-soufflet dans la dite plaque.

Selon un autre mode particulier de réalisation, ledit organe amortisseur pneumatique comprend une cloison fixe munie d'un trou de passage avec jeu de l'axe du clapet et de mise en communication avec la seconde cavité, laquelle cloison fixe constitue une partie de ladite cloison de séparation entre les première et seconde cavités, une cloison mobile à laquelle sont rattachés l'axe de commande du clapet et une première extrémité de l'organe de comparaison constitué par une membrane à soufflet, la seconde extrémité de la membrane à soufflet étant rattachée à ladite cloison fixe.

La présence d'un organe amortisseur pneumatique permet de diminuer la sensibilité du système de régulation aux vibrations ambiantes, compte tenu des principaux régimes vibratoires constatés.

D'autres caractéristiques et avantages de l'invention ressortiront de la description suivante de modes particuliers de réalisation, donnés à titre d'exemples en référence aux dessins annexés, sur lesquels :
- la figure 1 est une vue schématique en coupe verticale d'un accumulateur de liquide à régulation de niveau selon un premier mode de réalisation de l'invention,
- la figure 2 est une vue partielle selon la flèche F de la figure 1,
- la figure 3 est une vue schématique en coupe verticale d'un accumulateur de liquide selon l'invention semblable au mode de réalisation de la figure 1, mais muni d'un soufflet supplémentaire permettant la création d'un effet amortisseur,
- la figure 4 est une vue schématique en coupe verticale d'un accumulateur de liquide selon l'invention qui constitue une variante du mode de réalisation de la figure 3 et comprend des moyens amortisseurs n'impliquant pas la mise en oeuvre d'un soufflet supplémentaire, et
- la figure 5 est une vue schématique en coupe verticale d'un accumulateur de liquide analogue au mode de réalisation de la figure 1, mais dans lequel une partie des éléments constitutifs du système de régulation sont disposés de façon verticale, et non horizontale.

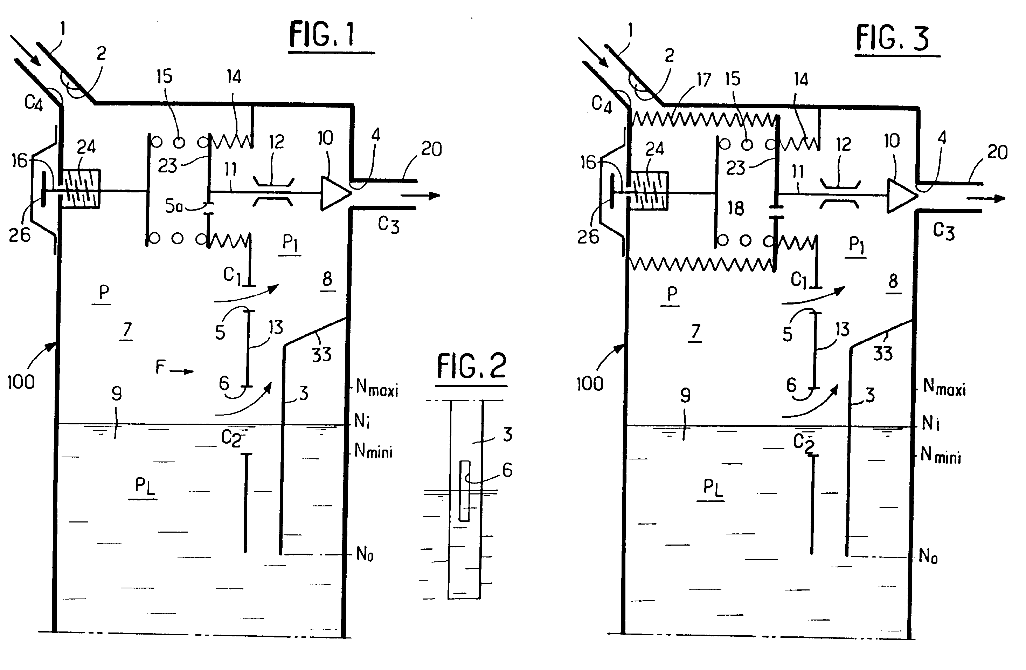

Si l'on se réfère à la figure 1, on voit un accumulateur de liquide comprenant une enceinte 100 qui est en communication avec une installation hydraulique, non représentée, dont les caractéristiques peuvent être très diverses. La partie inférieure de l'espace compris à l'intérieur de l'enceinte 100 est occupée par un liquide 9 dont la surface libre est située à un niveau Ni devant être régulé et qui peut fluctuer entre un niveau minimum Nmin et un niveau maximum Nmax. L'espace situé à l'intérieur de l'enceinte 100 au-dessus de la surface libre du liquide 9 est occupé par un gaz sous pression introduit par un dispositif d'injection de gaz 1, 2 situé à un niveau supérieur au niveau maximum Nmax que peut atteindre le liquide 9. Le dispositif d'injection de gaz comprend une conduite 1 d'arrivée de gaz à une pression supérieure à la pression règnant dans l'enceinte 100, et un orifice calibré 2 pour définir une section de passage calibrée 2 pour le flux de gaz entrant dans l'enceinte 100 et par là-même permettre de quantifier le gaz introduit dans l'enceinte.

La partie supérieure du réservoir défini par l'enceinte 100 est divisée en une première cavité 7 et une seconde cavité 8 séparées par un ensemble d'éléments 13, 23, 33 formant cloison.

Au moins un orifice calibré 5, 5a est ménagé dans une zone de la cloison 13, 23, 33 qui ne risque pas d'être immergée, c'est-à-dire qui est située au-dessus du niveau Nmax.

La cloison 13, 23, 33 est prolongée à sa partie inférieure par une portion tubulaire 3 qui est sensiblement perpendiculaire à la surface du liquide 9 et se prolonge vers le bas à l'intérieur du liquide jusqu'à un niveau Nₒ situé nettement en-dessous du niveau minimal Nmin que le liquide est susceptible d'atteindre.

La portion tubulaire 3 constituant un prolongement de la cloison de séparation 13, 23, 33 possède une ouverture 6 dans la zone de contrôle du niveau de liquide. L'ouverture 6 comprend au moins une fente étroite, par exemple de forme rectangulaire, dont les grands côtés sont orientés selon les génératrices du tube 3 (figure 2). La mise en oeuvre d'une fente verticale étroite contribue à définir un système de régulation à faible gain. L'ouverture 6 peut comprendre plusieurs fentes réparties à la périphérie du tube 3. Dans ce cas, la précision est augmentée et il existe également une amélioration de la tolérance au ballottement du liquide. On notera que la ou les fentes définissant l'ouverture 6 peuvent le cas échéant ne pas présenter une largeur constante, pour répondre à des conditions particulières exigées pour l'asservissement.

L'ouverture 6 s'étend de part et d'autre du niveau Nᵢ qui doit être régulé et qui constitue l'interface entre le fluide liquide et le gaz sous pression. La hauteur de l'ouverture 6 s'étend de préférence légèrement au-delà des niveaux minimum Nmin et maximum Nmax que peut atteindre le liquide 9.

L'accumulateur de liquide selon l'invention à niveau de liquide régulé comprend en outre un dispositif 4, 10, 20 de soutirage de gaz présent dans l'enceinte 100. Ce dispositif de soutirage de gaz 4, 10, 20 comprend un orifice calibré 4 constitué par un siège de clapet qui est disposé dans une partie de l'enceinte 100 qui délimite la seconde cavité 8. L'orifice 4 débouche dans une conduite 20 d'évacuation du gaz vers l'extérieur de l'enceinte 100.

La section de passage du dispositif de soutirage de gaz est définie par un clapet 10 en forme de pointeau qui obture partiellement l'orifice, d'une tige de commande 11 qui est guidée en translation dans des guides fixes 12 et est rattachée par son extrémité arrière à un élément de comparaison mobile 14, 23 qui constitue une partie de la cloison 13, 23, 33 de séparation des cavités 7 et 8 et réagit à la différence de pression P-P₁ existant entre les cavités 7 et 8.

Le débit d'injection de gaz à travers l'orifice 2 est approximativement constant.

L'orifice calibré 5, 5a ménagé dans une zone 13, 23 de la cloison de séparation des cavités 7, 8 qui ne risque pas d'être immergée, met en communication constante les deux cavités 7 et 8.

L'orifice 6 disposé dans la zone de contrôle du niveau de liquide présente une section qui croît lorsque le niveau du liquide baisse et décroît lorsque le niveau du liquide monte.

La différence de pression aux bornes de l'orifice fictif équivalent aux orifices 5, 5a et 6 placés en parallèle s'applique sur l'élément de comparaison mobile 14, 23 et modifie la position du pointeau 10 de telle sorte que la section de passage du dispositif de soutirage de gaz 4, 10, 20 augmente lorsque le niveau Nᵢ du liquide 9 baisse et diminue lorsque le niveau du liquide 9 monte.

Dans le régime de travail normal du régulateur de niveau de liquide, le pointeau 10 ne vient jamais en contact avec son siège 4, et un petit débit de gaz vers l'extérieur existe en permanence.

L'élément de comparaison 23, 14 peut être constitué par une membrane en forme de soufflet 14 ou un autre type de membrane de raideur faible, mais non nulle, dont une extrémité est rattachée à des éléments de cloison fixes 13 et l'autre extrémité est rattachée à un élément de cloison mobile 23 auquel est fixée l'extrémité arrière de la tige de commande 11 du pointeau 10. Comme on peut le voir sur la figure 1, un orifice calibré Sa de section fixe assurant un passage du gaz entre les cavités 7 et 8 peut être réalisé directement dans la cloison mobile 23.

Il est prévu un dispositif de réglage en translation de l'équipage mobile constitué par l'élément de comparaison 14, 23, la tige de commande 11 et le pointeau 10.

Ce dispositif de réglage comprend essentiellement un ressort 15, de flèche ajustable, exerçant sa force sur l'élément de comparaison 14, 23. Le ressort 15 peut agir de façon positive ou négative sur le soufflet 14. La tension du ressort 15 est réglée par une vis 16 dont la tête 26 est accessible de l'extérieur de l'enceinte 100 et qui coopère avec un écrou 24 solidaire de la paroi de l'enceinte 100.

La vis 16 permet de créer un terme de réglage Pr égal à la différence entre les pressions P et P₁ régnant dans les cavités 7, 8. La vis 16 permet de régler la section maximale de passage au niveau de l'orifice de sortie 4 en agissant, par l'intermédiaire du ressort 15 et du soufflet 14 placé en série, sur la tige de commande 11 du pointeau 10. La section maximale de passage au niveau de l'orifice de sortie 4 correspond à une valeur nulle pour le terme de réglage Pr créé par le ressort 15. La vis 16 permet de faire varier le terme de réglage Pr entre une valeur nulle et une valeur maximum.

A l'état d'équilibre, lorsque le niveau requis du liquide est atteint et stable, le débit de gaz à travers l'orifice calibré d'entrée 2 est égal à la somme des débits à travers l'ouverture 6 et à travers le ou les orifices calibrés 5, 5a. Le débit de gaz au niveau de l'orifice de sortie 4 reste aussi égal au débit à travers l'orifice calibré d'entrée 2.

En l'absence de gaz et de liquide, en air ambiant, il n'y a qu'un très léger déplacement du pointeau 10 par rapport à la position qu'il adopte à l'état d'équilibre, en fonctionnement. Ce léger déplacement correspond au terme de réglage.

La faible différence de pression entre les cavités 7 et 8, ajustable lors du réglage à l'aide de la vis 16, a l'avantage d'induire une faible vitesse de soutirage au niveau de la surface libre. Il en résulte une faible déformation de celle-ci, donc plus de précision, et l'élimination du risque de soutirage biphasique (liquide et gazeux) trop prononcé. L'existence d'une différence de pression qui reste faible entre les cavités 7 et 8 autorise un fonctionnement dans une large gamme de pression.

L'éjection de gaz vers l'extérieur est effectuée à travers le col 4 qui est subsonique. Toutefois, le col 4 d'éjection de gaz vers l'extérieur peut être sonique, si l'on respecte la condition selon laquelle la pression à l'extérieur de l'enceinte 100 est inférieure à la moitié de la pression régnant à l'intérieur de l'enceinte, dans la cavité 8. Dans ce cas, le système de régulation de niveau de liquide peut s'affranchir des conditions fluides régnant dans le lieu de rejet de gaz.

On notera que le dispositif selon l'invention comporte sa propre mesure de niveau liquide par des moyens mécaniques et ne demande pas l'adjonction d'un autre type de mesure, par exemple de nature électrique.

Par suite, l'accumulateur de liquide selon l'invention présente l'avantage d'être précis même sous forte pression et, dans le cas d'utilisation d'un col sonique 4 de sortie de gaz, d'être indépendant du lieu de rejet de gaz.

La nature strictement mécanique des éléments constituant le système de régulation de niveau permet une utilisation dans des milieux agressifs, tout en offrant une facilité de réglage et en étant très compact vie à vis de l'ensemble de l'accumulateur hydraulique dont le niveau de liquide est régulé.

L'existence d'un débit permanent de gaz réduit les risques de chocs répétés entre le pointeau obturateur 10 et le siège de clapet 4 constituant l'orifice de sortie, et donc le risque de matage du siège de clapet 4 qui pourrait entraîner une modification non souhaitée de la section de passage entre le siège et le pointeau 10.

On notera par ailleurs que dans le cas du mode de réalisation de la figure 1, comme pour les autres modes de réalisation des figures 3 à 5 les étanchéités sont toutes statiques.

Dans le dispositif selon l'invention, la consommation de gaz reste faible et un asservissement précis peut être obtenu du fait de la loi sensiblement linéaire du débit d'éjection de gaz en fonction de la différence de pression entre les deux cavités 7 et 8. L'asservissement peut présenter une large bande passante, par exemple 100 Hz et au-delà.

Le débit permanent de gaz passant par l'orifice calibré 5, 5a assure une stabilité de l'asservissement et amortit les oscillations du pointeau 10.

L'accumulateur selon l'invention peut être utilisé avec des liquides volatils dans la mesure où les tensions de vapeur sont identiques dans les deux cavités 7 et 8, grâce à la communication permanente introduite entre ces cavités 7 et 8 par l'orifice calibré 5, 5a.

La figure 3 montre une variante de réalisation de l'accumulateur de liquide selon les figures 1 et 2. Sur la figure 3 les éléments semblables à ceux de l'accumulateur des figures 1 et 2 portent les mêmes références et ne seront pas décrits de nouveau. Le système de régulation de niveau de liquide incorporé dans l'accumulateur de la figure 3 comprend un dispositif amortisseur des mouvements du pointeau 10. Ce dispositif amortisseur comprend un second soufflet 17 qui entoure la vis 16 et le ressort 15 et se trouve fixé d'une part à une première extrémité sur la paroi de l'enceinte 100 et d'autre part à une deuxième extrémité sur une partie de cloison mobile 23 à laquelle sont rattachés le soufflet 14 et la tige de pointeau 11. Un petit orifice 18 ménagé dans la cloison mobile 23 assure une communication de gaz entre la cavité 8 et une troisième cavité définie par l'espace interne au second soufflet 17, de façon à constituer ainsi un dispositif amortisseur pneumatique solidaire de la tige de pointeau 11. La présence d'un dispositif amortisseur contribue à diminuer la sensibilité du système de régulation aux vibrations ambiantes, compte tenu des principaux régimes vibratoires constatés.

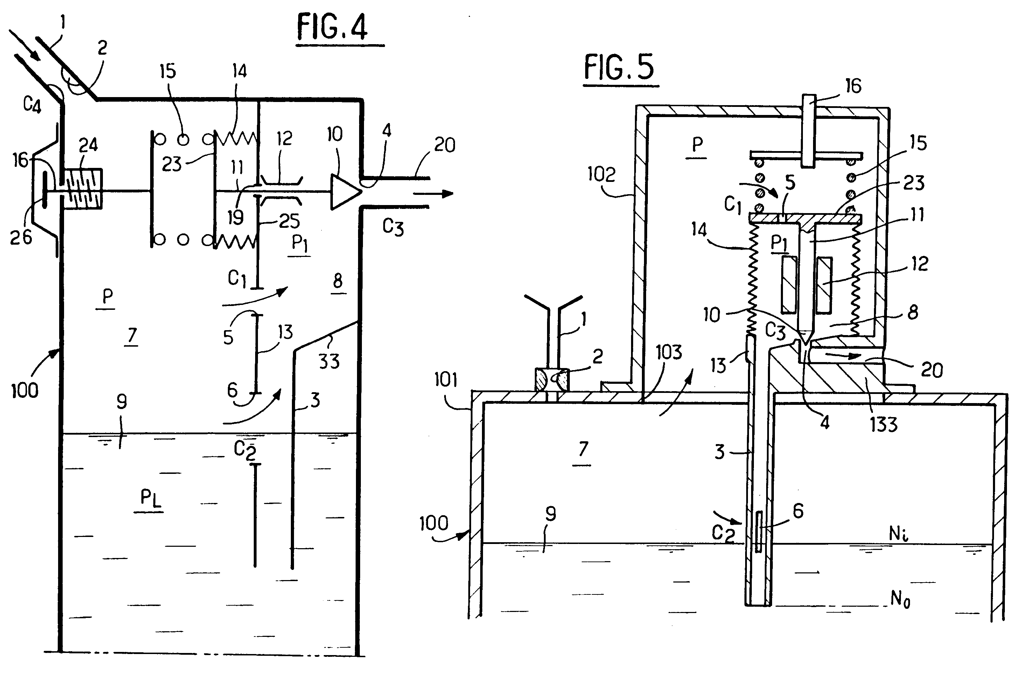

La figure 4 montre une variante de réalisation de l'accumulateur de liquide des figures 1 et 2, dans laquelle il est prévu un dispositif amortisseur de mouvements du pointeau 10 qui ne met en oeuvre qu'un seul soufflet.

Comme on peut le voir sur la figure 4, la tige 11 de commande de pointeau 10 traverse avec un jeu 19 une partie de cloison fixe 25 contribuant à définir les cavités 7 et 8. Le jeu 19 permet une communication du gaz entre la cavité 8 et une troisième cavité définie par l'espace interne au soufflet 14. L'extrémité du soufflet 14 non rattachée à la cloison fixe 25 est obturée par une cloison mobile 23 dépourvue de tout orifice d'échappement de gaz et sur laquelle une pression est exercée par le ressort 15 disposé dans la cavité 7. L'introduction de gaz de la cavité 8 à la petite cavité supplémentaire délimitée par le soufflet 14 et la cloison mobile 23 obturant le soufflet 14 et commandant la tige 11 de commande du pointeau 10 permet d'assurer un amortissement des mouvements du pointeau 10 comme dans le cas du mode de réalisation de la figure 3, mais sans qu'il soit nécessaire de rajouter un soufflet supplémentaire par rapport au mode de réalisation de la figure 1.

La figure 5 montre un accumulateur de liquide équipé d'un régulateur de niveau de liquide, dont le fonctionnement est tout à fait conforme à celui de la figure 1. Toutefois, la disposition de certains éléments est un peu différente de celle qui a été représentée sur la figure 1. Ainsi, sur la figure 1, la tige 11 de commande du pointeau 10, le soufflet 14, le ressort 15 et la vis de réglage 16 sont disposés horizontalement à la partie supérieure de l'enceinte 100 et en-dessous de l'orifice calibré 2 d'injection de gaz qui est situé tout à fait en haut de l'enceinte.

Au contraire, sur la figure 5, la tige 11 de commande du pointeau 10, le soufflet 14, le ressort 15 et la vis de réglage 16 sont disposés verticalement à la partie supérieure de l'enceinte 100, à l'intérieur d'un compartiment 102 en forme de cloche qui est monté sur une embase constituée par la paroi horizontale supérieure d'un réservoir de base 101 qui peut être un réservoir classique de grande capacité et constitue avec la cloche 102 l'ensemble de l'enceinte 100. Le mode de réalisation de la figure 5 permet d'adapter facilement un système de régulation de niveau de liquide à un accumulateur de liquide 101 classique.

Le dispositif 1, 2 d'injection de gaz sous pression à l'intérieur du réservoir de base 101 est disposé à la partie supérieure de ce réservoir de base 101, par exemple sur la paroi horizontale supérieure et assure l'injection de gaz dans une première cavité 7 qui est constituée par la partie supérieure du réservoir de base 101, située au-dessus du niveau de liquide Nᵢ, et se prolonge à l'intérieur de la cloche 102 à travers une ouverture de communication 103.

Le dispositif 4, 10, 20 de soutirage de gaz est placé dans un bloc inférieur 133 du compartiment 102 qui repose sur la paroi horizontale supérieure du réservoir de base 101, et se prolonge par une partie tubulaire 3 plongeant dans le liquide 9 jusqu'à un niveau Nₒ situé en dessous du niveau minimal que le liquide est susceptible d'atteindre.

Le pointeau mobile 10, qui coopère avec le siège de clapet 4 solidaire du bloc inférieur 133, est situé à l'extrémité d'une tige de commande 11 guidée en translation entre deux guides fixes 12 rapportés sur le bloc inférieur 133. L'extrémité supérieure de la tige de commande 11 est montée sur une plaque horizontale 23 formant cloison mobile sur laquelle agit un ressort 15 dont la pression Pr est elle-même pré réglée à l'aide d'un système de réglage en translation 16 disposé verticalement et accessible de l'extérieur de la cloche 102. Un soufflet 14 est fixé par une de ses extrémités sur la cloison mobile 23 et par son autre extrémité surle bloc inférieur 133 en entourant la tige de commande 11. Un orifice calibré 5 est ménagé dans la cloison mobile 23 pour assurer le passage d'un débit constant de gaz de la cavité 7 à la cavité 8 délimitée par la cloison mobile 23, le soufflet 14, le tube 3 et le bloc inférieur 133. Des fentes étroites 6 sont par ailleurs ménagées verticalement dans le tube 3 dans la zone de contrôle du niveau de liquide, de part et d'autre de l'interface liquide-gaz au niveau Nᵢ, comme explicité en référence aux figures 1 à 4. La communication entre la cavité 7 qui s'étend à la fois à la partie supérieure du réservoir 101, et dans le compartiment 102, et la cavité 8 délimitée par le soufflet 14, les cloisons 23, 13, 133 et le tube 3, s'effectue ainsi d'une part à travers l'orifice calibré 5 ménagé dans la cloison mobile 23 et d'autre part à travers les fentes 6 du tube 3 qui définissent une ouverture de section variable comme déjà indiqué plus haut.

## Revendications

1. Accumulateur de liquide sous haute-pression à niveau de liquide régulé, comprenant une enceinte (100) qui est en communication avec un circuit hydraulique et qui contient un fluide liquide (9) occupant partiellement l'espace interne à l'enceinte (100), un dispositif (1, 2) d'injection de gaz sous pression à l'intérieur de l'enceinte, et un dispositif (20, 4, 10) de soutirage du gaz présent dans l'enceinte (100), lequel dispositif (20, 4, 10) de soutirage présente une section de passage dont la valeur croît lorsque le niveau de liquide baisse à l'intérieur de l'enceinte (100) et décroît lorsque le niveau de liquide monte à l'intérieur de l'enceinte (100),
caractérisé en ce que la partie supérieure de l'espace interne à l'enceinte (100) est subdivisé en des première et seconde cavités (7, 8) par une cloison (13) présentant au moins un orifice calibré (5, 5a) ménagé dans une zone de la cloison qui ne risque pas d'être immergée, en ce que ladite cloison (13) est prolongée par une portion (3) sensiblement perpendiculaire à la surface du liquide (9) et se prolongeant vers le bas à l'intérieur du liquide jusqu'à un niveau (Nₒ) situé nettement en dessous du niveau minimal que le liquide est susceptible d'atteindre, en ce que la portion prolongée (3) de la cloison de séparation possède une ouverture (6) dans la zone de contrôle du niveau de liquide, l'ouverture (6) s'étendant de part et d'autre de l'interface de niveau (Nᵢ) entre le fluide liquide et le gaz sous pression, en ce qu'il comprend des moyens pour maintenir sensiblement constant le débit de fluide gazeux introduit dans l'enceinte (100) par le dispositif (1, 2) d'injection de gaz sous pression, en ce que le dispositif (20, 4) 10) de soutirage de gaz comprend un siège de clapet (4) coopérant avec un clapet (10) en forme de pointeau dont la position est réglée par un élément de comparaison mobile (14) constituant une partie de la cloison (13) et réagissant à la différence de pression (P-P₁) existant entre les première et seconde cavités (7) 8), et en ce que des moyens de réglage (15, 16) sont associés à l'élément de comparaison mobile (14), de manière à permettre qu'en régime de travail normal de la régulation de niveau de liquide, le clapet (10) ne vienne jamais en contact avec son siège (4) pour maintenir en permanence un faible débit de gaz vers l'extérieur.

2. Accumulateur de liquide selon la revendication 1, caractérisé en ce que la portion prolongée (3) de la cloison (13) présente la forme d'un tube perpendiculaire à la surface du liquide et en ce que l'ouverture (6) ménagée dans la portion prolongée (3) dans la zone de contrôle du niveau de liquide comprend au moins une fente étroite dont les grands côtés sont orientés selon les génératrices du tube (3) et qui contribue à définir un système de régulation à fiable gain.

3. Accumulateur de liquide selon la revendication 1 ou la revendication 2, caractérisé en ce que le dispositif (20, 4, 10) de soutirage de gaz présente un col subsonique défini par le siège de clapet (4) et le clapet (10).

4. Accumulateur de liquide selon la revendication 1 ou la revendication 2, caractérisé en ce que le dispositif (20, 4, 10) de soutirage de gaz présente un col sonique défini par le siège de clapet (4) et le clapet (10).

5. Accumulateur de liquide selon l'une quelconque des revendications 1 à 4) caractérisé en ce que l'élément de comparaison mobile (14) est constitué par une membrane telle qu'un soufflet.

6. Accumulateur de liquide selon l'une quelconque des revendications 1 à 4, caractérisé en ce que l'élément de comparaison mobile (14) est constitué par un piston.

7. Accumulateur de liquide selon l'une quelconque des revendications 1 à 6, caractérisé en ce que le dispositif de réglage en translation de l'élément de comparaison (14) auquel est relié le clapet (10) du dispositif de soutirage de gaz en vue d'assurer le réglage de la pression différentielle appliquée audit élément de comparaison (14) et d'ajuster la position d'ouverture du clapet (10) par rapport au siège de clapet (4) comprend un ressort (15) agissant sur l'élément de comparaison (14) et une vis (16) coopérant avec un écrou (24) solidaire de la paroi de l'enceinte (100) pour agir sur ledit ressort (15) et présentant une tête de commande (26) accessible de l'extérieur de l'enceinte (100).

8. Accumulateur de liquide selon la revendication 2, caractérisé en ce que l'ouverture (6) ménagée dans la portion prolongée (3) en forme de tube comprend plusieurs fentes étroites de même hauteur réparties dans ledit tube (3) et présentant des grands côtés orientés pour l'essentiel selon les génératrices du tube (3).

9. Accumulateur de liquide selon l'une quelconque des revendications 1 à 8, caractérisé en ce qu'il comprend en outre un organe amortisseur pneumatique (23, 19; 17, 18) solidaire de l'axe du clapet (10) du dispositif de soutirage de gaz et exerçant son action dans l'une des première et seconde cavités (7, 8) contenant le fluide gazeux.

10. Accumulateur de liquide selon la revendication 9, caractérisé en ce que ledit organe amortisseur pneumatique comprend une membrane à soufflet (17) montée entre la paroi de l'enceinte (100) et une plaque (23) à laquelle sont reliés d'une part l'élément de comparaison mobile (14) et d'autre part l'axe (11) de commande du clapet (10) du dispositif de soutirage, et en ce qu'un trou de communication (18) est ménagé entre la seconde cavité et l'espace interne de la membrane-soufflet (17) dans ladite plaque (23).

11. Accumulateur de liquide selon la revendication 9, caractérisé en ce que ledit organe amortisseur pneumatique comprend une cloison fixe (25) munie d'un trou (19) de passage avec jeu de l'axe (11) du clapet (10) et de mise en communication avec la seconde cavité (8), laquelle cloison fixe (25) constitue une partie deladite cloison de séparation entre les première et seconde cavités (7, 8), une cloison mobile (29) à laquelle sont rattachés l'axe (11) de commande du clapet (10) et une première extrémité de l'organe de comparaison (14) constitué par une membrane à soufflet, la seconde extrémité de la membrane à soufflet étant rattachée à ladite cloison fixe (25).

12. Accumulateur de liquide selon la revendication 1, caractérisé en ce que la portion prolongée (3) de la cloison (13) présente la forme d'un tube perpendiculaire à la surface du liquide et en ce que l'ouverture (6) ménagée dans la portion prolongée (3) dans la zone de contrôle du niveau du liquide comprend au moins une fente verticale étroite de largeur variable.

## Patentansprüche

1. Hochdruck-Flüssigkeitsakkumulator mit reguliertem Flüssigkeitspegel, bestehend aus einem Gehäuse (100), das mit einem Hydraulikkreis in Verbindung steht und das ein flüssiges Fluid (9) enthält, das der Innenraum des Gehäuses (100) teilweise einnimmt, einer Vorrichtung (1, 2) zum Einblasen von Druckgas in das Innere des Gehäuses, und einer Vorrichtung (20, 4, 10) zum Ableiten des im Gehäuse (10) vorhandenen Gases, die einen Leitungsquerschnitt hat, dessen Wert zunimmt, wenn der Flüssigkeitspegel im Inneren des Gehäuses (10) abnimmt und abnimmt, wenn der Flüssigkeitspegel im Inneren des Gehäuses (10) steigt,
**dadurch gekennzeichnet, daß**
der obere Teil des Innenraums des Gehäuses (10) in eine erste und zweite Kammer (7, 8) durch eine Trennwand (13) unterteilt ist, die wenigstens eine kalibrierte Öffnung (5, 5a) aufweist, die in einer Zone der Trennwand ausgebildet ist, die nicht eintauchen kann, daß die Zwischenwand (13) durch einen Abschnitt (3) verlängert ist, der im wesentlichen senkrecht zur Oberfläche der Flüssigkeit (9) verläuft und sich zum unteren Teil innerhalb der Flüssigkeit bis zu einem Pegel (N₀) verlängert, der deutlich unter dem minimalen Pegel liegt, den die Flüssigkeit erreichen kann, daß der verlängerte Abschnitt (3) der Trennwand eine Öffnung (6) in der Flüssigkeitspegel-Kontrollzone hat, die sich auf beide Seiten der Pegelgrenzschicht (Nᵢ) zwischen dem flüssigen Fluid und dem Druckgas erstreckt, daß er Einrichtungen aufweist, um die Durchsatzmenge des gasförmigen Fluids im wesentlichen konstant zu halten, das von der Druckgaseinblasvorrichtung (1, 2) in das Gehäuse (100) eingeleitet wird, daß die Gasableitvorrichtung (20, 4, 10) einen Sperrventilsitz (4) aufweist, der mit einem Sperrventil (10) in Form einer Nadel zusammenwirkt, desses Position von einem verstellbaren Komparatorelement (14) reguliert wird, das einen Teil der Trennwand (13) bildet und das auf die Druckdifferenz (P-P₁) reagiert, die zwischen der ersten und zweiten Kammer (7, 8) vorhanden ist, und daß dem verstellbaren Komparatorelement (14) Reguliereinrichtungen (15, 16) zugeordnet sind, so daß im normalen Arbeitsbereich der Regulierung des Flüssigkeitsniveaus das Sperrventil (10) niemals mit seinem Sitz (4) in Kontakt kommt, um ständig eine geringe Gasdurchsatzmenge nach außen aufrecht zu erhalten.

2. Flüssigkeitsakkumulator nach Anspruch 1,
**dadurch gekennzeichnet,** **daß**
der verlängerte Abschnitt (3) der Trennwand (13) die Form eine Rohres hat, das senkrecht zur Flüssigkeitsoberfläche verläuft, und daß die Öffnung (6), die in dem verlängerten Abschnitt (3) in der Flüssigkeitspegel-Kontrollzone ausgebildet ist, wenigstens einen schmalen Schlitz aufweist, dessen große Seiten längs der Erzeugenden des Rohres (3) ausgebildet sind und der dazu beiträgt, ein Reguliersystem mit geringer Verstärkung zu bilden.

3. Flüssigkeitsakkumulator nach Anspruch 1 oder 2,
**dadurch gekennzeichnet, daß**
die Gasableitvorrichtung (20, 4, 10) ein Unterschall-Halsstück aufweist, das von dem Sperrventilsitz (4) und dem Sperrventil (10) gebildet wird.

4. Flüssigkeitsakkumulator nach Anspruch 1 oder 2,
**dadurch gekennzeichnet, daß**
die Gasableitvorrichtung ein Schall-Halsstück bildet, das durch den Sperrventilsitz (4) und das Sperrventil (10) gebildet wird.

5. Flüssigkeitsakkumulator nach einem der Ansprüche 1 bis 4,
**dadurch gekennzeichnet, daß**
das verstellbare Komparatorelement (14) aus einer Membran wie einem Balg besteht.

6. Flüssigkeitsakkumulator nach einem der Ansprüche 1 bis 4,
**dadurch gekennzeichnet, daß**
das verstellbare Komparatorelement (14) aus einem Kolben besteht.

7. Flüssigkeitsakkumulator nach einem der Ansprüche 1 bis 6,
**dadurch gekennzeichnet, daß**
die Vorrichtung zur Regulierung der Verstellung des Komparatorelements (14), mit dem das Sperrventil (10) der Gasableitvorrichtung verbunden ist, um die Regulierung des Differentialdruckes sicherzustellen, mit dem das Komparatorelement (14) beaufschlagt wird, und die Öffnungsposition des Sperrventils (10) bezüglich des Sperrventilsitzes (4) einzustellen, eine Feder (15) aufweist, die auf das Komparatorelement wirkt, sowie eine Schraube (16), die mit einer Mutter (16) zusammenwirkt, die an der Wand des Gehäuses (10) sitzt, um auf die Feder (15) einzuwirken, und eine Steuerkopf (26), der außerhalb des Gehäuses (10) zugänglich ist.

8. Flüssigkeitsakkumulator nach Anspruch 2,
**dadurch gekennzeichnet, daß**
die Öffnung (6), die in dem verlängerten Abschnitt (3) in Form eines Rohres ausgebildet ist, mehrere schmale Schlitze gleicher Höhe aufweist, die im Rohr (3) verteilt sind und große Seiten haben, die im wesentlichen längs der Erzeugenden des Rohrs (3) ausgerichtet sind.

9. Flüssigkeitsakkumulator nach einem der Ansprüche 1 bis 8,
**gekennzeichnet, durch**
ein pneumatisches Dämpfungselement (23, 19; 17, 18), das mit der Achse des Sperrventils (10) der Gasableitvorrichtung verbunden ist und in der ersten oder zweiten Kammer (7, 8) wirkt, die das gasförmige Fluid enthält.

10. Flüssigkeitsakkumulator nach Anspruch 9,
**dadurch gekennzeichnet, daß**
das pneumatische Dämpfungselement eine Balgmembran (17) aufweist, die zwischen der Wand des Gehäuses (100) und einer Platte (23) angeordnet ist, mit der einerseits das verstellbare Komparatorelement (14) und andererseits die Achse (11) zur Steuerung des Sperrventils (10) der Ableitvorrichtung verbunden ist, und daß eine Verbindungsöfffnung (18) zwischen der zweiten Kammer und dem Innenraum der Balgmembran (17) in dieser Platte (23) ausgebildet ist.

11. Flüssigkeitsakkumulator nach Anspruch 9,
**dadurch gekennzeichnet, daß**
das pneumatische Dämpfungselement eine feste Trennwand (25) aufweist, die mit einer Öffnung (19) für den ein Spiel habenden Durchgang der Achse (11) des Sperrventils (10) und zur Verbindung mit der zweiten Kammer (8) versehen istun die einen Teil der Trennwand zwischen der ersten und zweiten Kammer (7, 8) bildet, sowie eine verstellbare Trennwand (29), an der die Achse (11) zur Steuerung des Sperrventils (10) und das eine Ende des Komparatorelements (14) befestigt sind, das von einer Balgmembran gebildet wird, wobei das andere Ende der Balgmembran mit der festen Trennwand (25) verbunden ist.

12. Flüssigkeitsakkumulator nach Anspruch 1,
**dadurch gekennzeichnet, daß**
der verlängerte Abschnitt (3) der Trennwand (13) die Form eines Rohres hat, das zur Flüssigkeitsoberfläche senkrecht verläuft, und daß die in dem verlängerten Abschnitt (3) in der Flüssigkeitspegel-Steuerzone ausgebildete Öffnung wenigstens einen schmalen vertikalen Schlitz veränderbarer Breite hat.

## Claims

1. Liquid accumulator for liquid under high pressure and at regulated level, comprising a vessel (100) which is in communication with a hydraulic circuit and which contains a liquid fluid (9) occupying a portion of the space inside the vessel (100), a gas injector device (1, 2) for injecting gas under pressure into the vessel, and a gas bleeder device (20, 4, 10) for bleeding off gas present in the vessel (100), said bleeder device (20, 4, 10) having a flow section whose value increases when the liquid level inside the vessel (100) drops and decreases when the liquid level inside the vessel (100) rises,
characterized in that the top portion of the space inside the vessel (100) is subdivided into first and second cavities (7, 8) by a partition (13) having at least one calibrated orifice (5, 5a) provided through a zone of the partition which is not in danger of being submerged, in that said partition (13) is extended by a portion (3) substantially perpendicular to the surface of the liquid (9) and extending downwards into the liquid to a level (Nₒ) situated well below the minimum level to which the liquid may drop, in that the extended portion (3) of the separating partition has an opening (6) in the liquid level control zone, the opening (6) extending on either side of the level interface (Nᵢ) between the liquid fluid and the gas under pressure, in that it includes means for maintaining the flow rate of the gas introduced into the vessel (100) by the pressurized gas injector device (1,2) substantially constant, in that the gas bleeder device (20, 4, 10) comprises a valve seat (4) co-operating with a valve member (10) in the form of a needle whose position is adjusted by a moving comparator element (14) constituting a portion of the partition (13) and responding to the pressure difference (P-P₁) existing between the first and second cavities (7, 8), and in that adjustment means (15, 16) are associated with moving comparator element (14), so as to ensure that under normal operating conditions for regulating the level of the liquid, the valve member (10) never comes into contact with its seat (4), thereby permanently maintaining a small flow of gas to the outside.

2. Liquid accumulator according to claim 1, characterized in that the extended portion (3) of the partition (13) is in the form of a tube extending perpendicularly to the liquid surface, and in that the opening (6) provided through the extended portion (3) in the liquid level control zone comprises at least one narrow slot whose long sides extend along the generator lines of the tube (3) and which contributes to defining a low gain regulation system.

3. Liquid accumulator according to claim 1 or claim 2, characterized in that the gas bleeder device (20, 4, 10) has a subsonic throat defined by the valve seat (4) and the valve member (10).

4. Liquid accumulator according to claim 1 or claim 2, characterized in that the gas bleeder device (20, 4, 10) has a sonic throat defined by the valve seat (4) and the valve member (10).

5. Liquid accumulator according to any one of claims 1 to 4, characterized in that the moving comparator element (14) is constituted by a membrane such as a bellows.

6. Liquid accumulator according to any one of claims 1 to 4, characterized in that the moving comparator element (14) is constituted by a piston.

7. Liquid accumulator according to any one of claims 1 to 6, characterized in that the adjustment means for adjusting the position in translation of the comparator element (14) to which the valve member (10) of the gas bleeder device is connected for the purpose of adjusting the differential pressure applied to said comparator element (14) and for adjusting the open position of the valve member (10) relative to the valve seat (4) comprises a spring (15) acting on the comparator element (14) and a screw (16) co-operating with a nut (24) fixed to the wall of the vessel (100) in order to act on said spring (15) and having a control head (26) accessible from outside the vessel (100).

8. Liquid accumulator according to claim 2, characterized in that the opening (6) provided through the extended portion (3) in the form of a tube comprises a plurality of narrow same-height slots distributed around said tube and having their long sides extending substantially along the generator lines of the tube (3).

9. Liquid accumulator according to any one of claims 1 to 8, characterized in that it further comprises a pneumatic damper member (23, 19; 17,18) fixed to the shaft of the gas bleeder device valve member (10) and exerting its effect in one of the first and second cavities (7,8) containing the gaseous fluid.

10. Liquid accumulator according to claim 9, characterized in that said pneumatic damper member comprises a bellows membrane (17) mounted between the wall of the vessel (100) and a plate (23) to which both the moving comparator element (14) and the control shaft (11) of the bleeder device valve member (10) are mounted, and in that a communication hole (18) is provided through the said plate (23) between the second cavity and the space inside the bellows membrane (17).

11. Liquid accumulator according to claim 9, characterized in that the said pneumatic damper member comprises a fixed partition (25) provided with a hole (19) allowing the shaft (11) of the valve member (10) to pass therethrough with clearance and providing communication with the second cavity (8), said fixed partition (25) constituting a portion of said separating partition between the first and second cavities (7, 8), a moving partition (29) to which both the valve member (10) control shaft (11) and a first end of the comparator member (14) constituted by a bellows membrane are fixed, with the second end of the bellows membrane being attached to said fixed partition (25).

12. Liquid accumulator according to claim 1, characterized in that the extended portion (3) of the partition (13) is in the form of a tube perpendicular to the surface of the liquid and in that the opening (6) through the extended portion (3) in the liquid level control zone comprises at least one narrow vertical slot of varying width.
